# EUROPEAN PATENT SPECIFICATION

(11) **EP 2 468 569 B1**
(45) Date of publication and mention of the grant of the patent: **05.03.2014**
(21) Application number: 10196954.1
(22) Date of filing: 23.12.2010
(51) Int. Cl.: B60N 2/56

(54) **Ventilative car seat back**
Belüftende Fahrzeugsitzlehne
Arrière ventilé de siège de voiture

(43) Date of publication of application: 27.06.2012
(73) Proprietor: Lin, Chen-Chang, Shengang Township T'ai chung (TW)
(72) Inventor: Lin, Chen-Chang, Shengang Township T'ai chung (TW)
(74) Representative: Lang, Christian

(56) References cited:
- JP-A- 11 070 031
- JP-U- 60 121 857
- US-A- 2 758 532
- US-A- 2 791 956
- US-A- 3 039 817
- US-A- 4 589 656

## Description

### Field of the Invention

The present invention relates to a car seat back, and more specifically to a ventilative car seat back.

### Description of the Prior Art

To enhance the comfort of conventional car seat backs, a car seat back is developed to have a foam layer and a leather reclining surface. Said car seat back is comfortable to be reclined, but it fails to cool the reclining surface when a user reclines on said car seat back.

To solve the above-mentioned problem, car seat backs as shown in TWM261396 and TWM373838 were brought into the market. Said car seat backs can solve the heat problem occurred when a user's back touching a car seat back, but said patents either require an additional power supply to drive a fan so as to generate an airflow, or need to be equipped with an extra wind pipe in a car. Consequently, the hot or cool air can be lead into an air channel which is disposed on the car seat backs. However, said patents have the following disadvantages:
1) It requires multiple devices such as fan, motor, and the like to generate airflow, so that the structure of said car seat backs becomes more complicated.
2) Correspondingly, it needs to install additional devices to generate hot or cool air at the said seat backs. Therefore, users have to pay for the installation fee of the devices, or the fee may be transferred to the selling price of the car. In this way, said car seat backs are not competitive in price, and further fails to be affordable for all users.
3) An additional wind pipe, fan or other components connected to said seat backs will reduce the in-car space and further have a bad effect on the design integrity of a car.
4) Said patents rely on additional electric power to drive a fan. If an additional battery is used for power supply, it needs extra charge for battery and creates a recycling problem. If a car battery is used for power supply, it may disturb the stability of the voltage for other devices of the car.

The present invention is, therefore, arisen to obviate or at least mitigate the above mentioned disadvantages.

US 2,791,956 A1 describes a ventilated automobile seat pad including air perforations which are connected to an air inlet via air passages. The air inlet is connected to an air scoop which is configured to protrude outside the window of the automobile so as to guide an air flow through the scoop, the inlet, the passages and the air perforations towards the back of a person sitting on the pad. Further examples for conventional ventilated back rests for a vehicle seat are presented by US 2,758,532 A1, which is considered the closest prior art, and US 3,039,817 A1.

Starting from the cited prior art it is the object of the present application to provide a ventilated car seat back which is configured to control the air flow towards the back to be cooled on demand and if desired to prevent air supply through the inlet at all.

### SUMMARY OF THE INVENTION

The main object of the present invention is to provide a ventilative car seat back without power driven systems.

Another object of the present invention is to provide a ventilative car seat back which is environmentally friendly.

Another object of the present invention is to provide a ventilative car seat back which has a simple structure without additional costs for installation.

The above-mentioned objects are solved by the ventilated car seat back according to claim 1. Advantageous improvements thereof are described by the dependent claims.

To achieve the above and other objects, a ventilative car seat back of the present invention includes a main body, at least one air channel, and a deflector. The main body has a reclining surface, two side surfaces, and a first connecting portion. Plural air holes are formed on the reclining surface. One of the side surfaces is formed with at least one inlet, and the inlet communicates with the air channel of the main body. The deflector has a second connecting portion. The second connecting portion is connected to the first connecting portion, so that the deflector can deflect the cool air, which is blown from a car air conditioner, to the inlet of the side surface. Then, the cool air in the air channel is expelled from the air holes so as to cool down the heat accumulated when a user's back is touching the seat back. Similarly, the deflector can deflect the warm air, which is blown from the car air conditioner, to the inlet of the side surface so as to warm up the user's back in the cold seasons.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

FIG 1 is a stereogram in accordance with a preferred embodiment of the present invention, wherein the deflector opens.
FIG. 2 is a stereogram in accordance with a preferred embodiment of the present invention, wherein the deflector closes and covers on the inlet.
FIG. 3 is a side sectional view in accordance with a preferred embodiment of the present invention.
FIG. 4 is a stereogram in accordance with another preferred embodiment of the present invention.

### DETAILED DESCRIPTION OF THE PREFERRED EMBODIMENTS

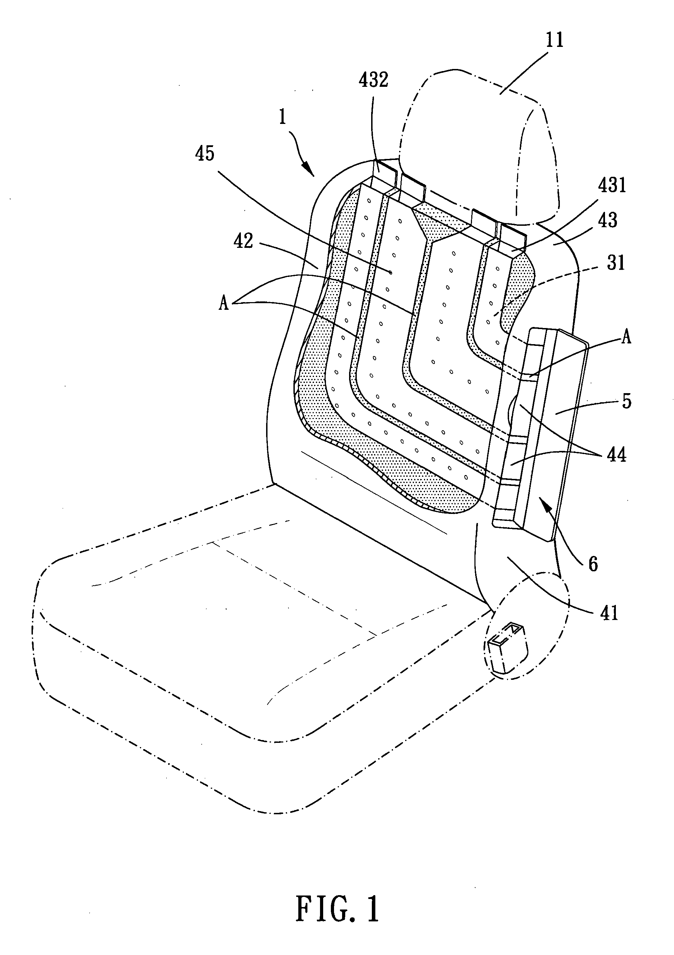

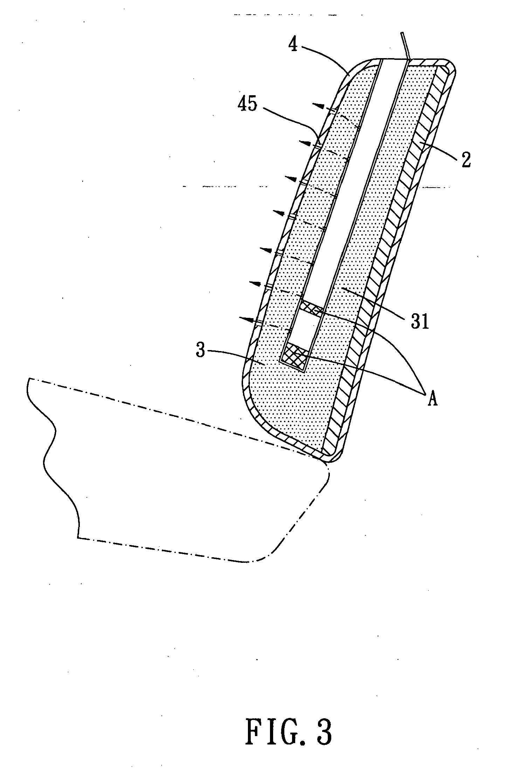

Please refer to FIG. 1 to FIG. 3 for a prefered embodiment of the present invention. A ventilative car seat back of the embodiment includes a main body 1. The main body 1 has a support portion 2, a foam layer 3, a seat cover 4, and a deflector 5. The support portion 2 is coated with the foam layer 3, and the support portion 2 is formed with a first connecting portion. The seat cover 4 covers the foam layer 3. Said main body 1 further comprises two side surfaces 41, a reclining surface 42 and a top surface 43. The reclining surface 42 is provided for being reclined, and one of the side surfaces 41 which is away from a car door is formed with at least one inlet 44. The first connecting portion of the support portion 2 is located at the side surface which is formed with the inlet 44.

Further, the foam layer 3 is formed with a flat room. Preferably, the flat room is divided into plural air channels 31 by plural L-shaped partitions A. The air channels 31 communicate with the inlet 44. In the present embodiment, the inlet 44 extends from one end of the air channels 31 so that the inlet 44 is formed in a shape like a flat groove. The shape can provide a good deflecting effect.

The top surface 43 of the main body can be disposed with a head portion 11 for a user's head to recline. The reclining surface 42 further comprises plural air holes 45 which communicate with the air channels. Preferably, the air holes 45 extend through the seat cover 4 and the foam layer 3 with a diameter of at least 1 millimeter. Thereby, air, which is blown from a car air conditioner, flows through pores of the foam layer 3 or the air holes 45. The air is then expelled from the air holes of the reclining surface, and is blown toward a user's back which reclines on the reclining surface 42.

Moreover, the top surface 43 of the main body 1 is formed with one or more outlets 431. The outlet 431 communicates with another end of the air channels. Preferably, the main body 1 further comprises one or more lids 432. The quantity of the lids 432 is corresponding to the quantity of the outlets 431. The lid 432 can be detachably or pivotally fixed on one side of the outlet 431. Preferably, one end of the lid 432 is pivotally fixed near one side of the outlet 431, so that another end of the lid 432 can pivot and cover the outlet 431. When cool air contacts the user's back, warm air on the seat back will then be circulated and expelled through the outlet 431. Thereby, the cool air from the inlet 44 is exchanged with the warm air which is accumulated from the user's back. The warm air is then expelled from the outlet 431. The reclining surface 42 touched by the user's back for a long time can be cooled down by the circulation of the cool air. In the cold seasons, the lid 432 can be closed to cover on the outlet 431 so as to keep warm air in the air channels 31 and the air holes 45. In this way, the user's back can be kept warm.

The deflector 5 is a rectangle plate which is corresponding to the inlet 44. The deflector 5 has a second connecting portion. The second connecting portion is connected to the first connecting portion. The second connecting portion is an axle, and the first connecting portion is an axial hole for the axle to pivotally connect thereto. Thereby, the deflector 5 is disposed pivotally at one side of the inlet 44. Preferably, a deflecting slot 6 is defined between the deflector 5 and the side surface 41. The inlet 44 is located at one side of the deflecting slot 6 which is away from the reclining surface 42. Therefore, when air is blown from the air conditioner to backseats, the air is then lead to the inlet 44 by the deflector 6. The air then flows through the air channels 31 and comes out from the air holes 45. In this way, the cool air can be circulated inside of the car seat back so as to avoid a hot and stuffy feeling when the user's back is reclining on the seat back.

In present embodiment, the deflector 5 is movable between a first position and a second position, so that the angle between the inlet 44 and the deflector 5 can be changed by demand. Thereby, the amount of cool air, which is lead into the inlet 44, can be adjusted. Preferably, the first connecting portion is connected pivotally to the second connecting portion, so that the second connecting portion is able to pivot with respect to the first connecting portion about an axle.

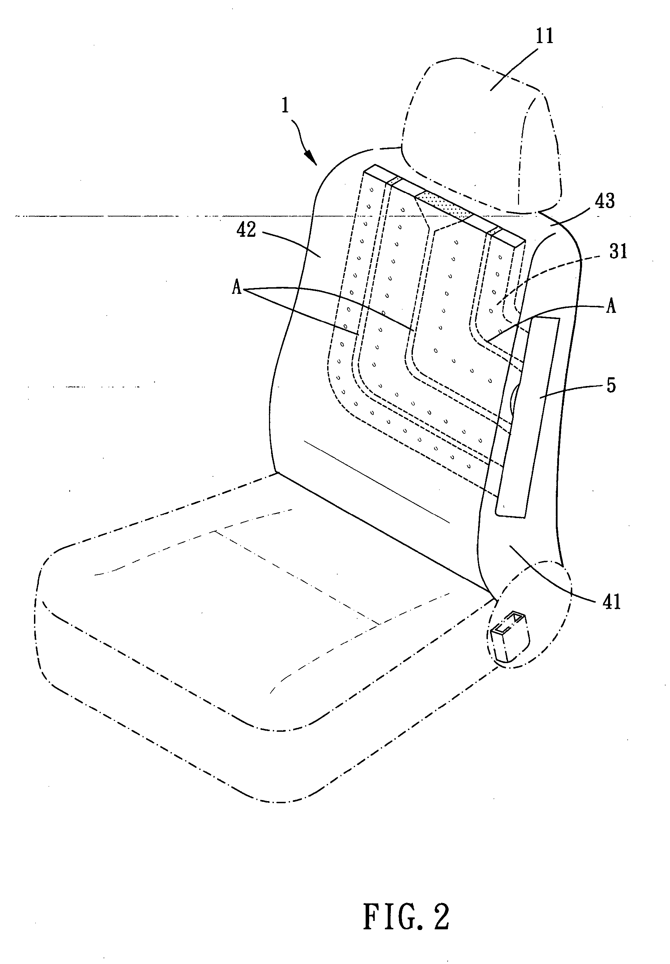

Please refer to the FIG. 1. When users feel hot and stuffy about their backs, the users can move the deflector 5 to the first position where the deflector 5 is disposed at an angle of 90° with the inlet 41 and has a better deflecting effect. By that means, the deflector 5 is disposed at a bigger angle with the inlet 41 so as to ventilate the car seat back. When the user feels cold, the user can move the deflector 5 to the second position, as shown in FIG. 2, so that the deflector 5 closes the inlet 41 and prevents the air from flowing into the inlet 44. Consequently, the air conditioner has its original effect to moderate temperature.

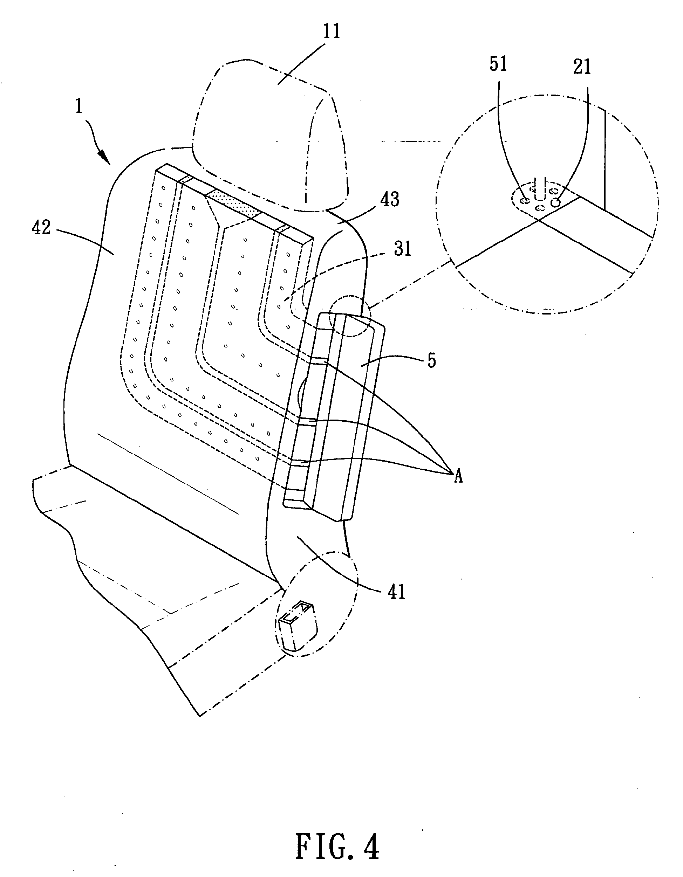

Please refer to the FIG. 4. In another embodiment, the first and the second connecting portion can be added with a position structure. One of the embodiments of the position structure is as disclosed as the FIG. 4. The first connecting portion is a bead 21, and the second connecting portion is a plurality of notches 51. The bead 21 can selectively abut against one of the notches 51. The bead moves from one of the notches 51 to another when the deflector 5 is pivoted. Accordingly, the users can change the angle between the deflector 5 and the inlet 41 by demand so as to accurately adjust the amount of the air which flows into the inlet 41. The position structure can be a ratchet formed on a connect area between the first and the second connecting portion, so that the deflector 5 can be located at multiple positions. In other possible embodiments, the first connecting portion can be a first fabric surface extending from the seat cover 4. The second connection portion can be a second fabric surface which covers the deflector 5. The connect area between the first and the second fabric surface is stitched up.

Accordingly, one of the side surfaces 41 of the car seat back of the present invention is formed with at least one inlet 44. And a deflector which can pivot is disposed nearby the inlet 44. The present invention has the following advantages:
1) It has a temperature adjustment effect on the car seat back without additional electric power. Therefore, there's no problem about the recycling of used battery and the voltage instability.
2) It includes a deflector, which is connected pivotally to the car seat back, and a flat inlet, which is formed one a side surface of the car seat back. In other words, it has a simple structure so that it doesn't require additional expense or costly installation fee.
3) The deflector 5 is used for blocking cool or warm air from a car air conditioner and leading the air to circulate in the car seat back. In other words, it recycles the air from the conditioner without consuming extra energy, so it is environmentally friendly.
4) Correspondingly, the deflector 5, which is disposed on the side surface of the seat back, can be closed and become a part of the seat back without occupying any in-car space. And it doesn't have a bad effect on the design integrity of a car.

From the above mentioned, it's obvious that the ventilative car seat back of the present invention can overcome the disadvantages of the prior art with its simple structure.

## Claims

1. A ventilative car seat back, comprising:
a main body (1), having a reclining surface (42), two side surfaces (41), and a first connecting portion, the reclining surface (42) adapted to be reclined, at least one inlet (44) being formed on one of the side surfaces (41), the first connecting portion located on the side surface which is formed with the inlet (44);
at least one air channel (31), formed in the main body (1), the air channel (31) communicating with the inlet (44);
plural air holes (45), formed on the reclining surface (42), the air holes (45) communicating with the air channel (31);
a deflector (5), having a second connecting portion, and the second connecting portion connected to the first connecting portion,
wherein the deflector (5) is movable between a first position and a second position so as to adjust an amount of air deflected into the inlet (44) by the deflector (5),
wherein the first connecting portion is pivotally connected to the second connecting portion, so that the second connecting portion is able to pivot with respect to the first connecting portion about an axle,
wherein when the deflector is pivoted to the second position, the deflector closes the inlet and prevents the air from flowing into the air inlet,
**characterized in that**
the first connecting portion comprises a bead (21), the second connecting portion comprises plural notches (51), and the bead (21) selectively abuts against one of the notches (51) or that the second connecting portion is an axle, and the first connecting portion is an axial hole for the axle to pivotally connect thereto.

2. The ventilative car seat back of claim 1, wherein the main body (1) comprises a top surface (43), the top surface (43) is formed with at least one outlet (431), and the outlet (431) communicates with the air channel (31).

3. The ventilative car seat back of claim 2, wherein the main body (1) further comprises at least one lid (432), one end of the lid (432) is pivotally fixed on the main body (1), and the lid (432) is located at one side of the outlet (431).

4. The ventilative car seat back of claim 1, wherein the air channel (31) is divided into plural L-shaped charnels by plural partitions (A).

## Patentansprüche

1. Belüftete Autositzlehne, die umfasst:
einen Hauptkörper (1), der eine Anlehnfläche (42), zwei Seitenflächen (41) und einen ersten Verbindungsbereich aufweist, wobei die Anlehnfläche (42) darauf ausgelegt ist verstellt zu werden, wobei mindestens ein Einlass (44) an einer der Seitenflächen (41) ausgebildet ist, wobei der erste Verbindungsbereich an der Seitenfläche angeordnet ist, die mit dem Einlass (44) ausgebildet ist;
mindestens einen Luftkanal (31), der in dem Hauptkörper (1) ausgebildet ist, wobei der Luftkanal (31) mit dem Einlass (44) in Verbindung steht;
eine Vielzahl Luftlöcher (45), die an der Anlehnfläche (42) ausgebildet sind, wobei die Luftlöcher (45) mit dem Luftkanal (31) in Verbindung stehen; und
einen Deflektor (5), der einen zweiten Verbindungsbereich aufweist, wobei der zweite Verbindungsbereich mit dem ersten Verbindungsbereich verbunden ist,
wobei der Deflektor (5) zwischen einer ersten Position und einer zweiten Position beweglich ist, um eine in den Einlass (44) gelenkte Luftmenge mithilfe des Deflektors (5) zu justieren,
wobei der erste Verbindungsbereich drehbar mit dem zweiten Verbindungsbereich verbunden ist, so dass der Verbindungsbereich in der Lage ist, in Bezug auf den ersten Verbindungsbereich um eine Achse zu drehen,
wobei wenn der Deflektor zu der zweiten Position gedreht ist, der Deflektor den Einlass verschließt und die Luft am Hineinströmen in den Lufteinlass hindert,
**dadurch gekennzeichnet, dass**
der erste Verbindungsbereich einen Wulst (21) umfasst und der zweite Verbindungsbereich eine Vielzahl von Aussparungen (51) umfasst, wobei der Wulst (21) selektiv an einer der Aussparungen (51) anliegt, oder dass der zweite Verbindungsbereich eine Achse ist und der erste Verbindungsbereich ein Achsenloch ist, um die Achse drehbar damit zu verbinden.

2. Belüftete Autositzlehne nach Anspruch 1, wobei der Hauptkörper (1) eine obere Fläche (43) umfasst, wobei die obere Fläche (43) mit mindestens einem Auslass (431) ausgebildet ist und wobei der Auslass (431) mit dem Luftkanal (31) in Verbindung steht.

3. Belüftete Autositzlehne nach Anspruch 2, wobei der Hauptkörper (1) ferner einen Deckel (432) umfasst, wobei ein Ende des Deckels (432) drehbar an dem Hauptkörper (1) befestigt ist und wobei der Deckel (432) an einer Seite des Auslasses (431) angeordnet ist.

4. Belüftete Autositzlehne nach Anspruch 1, wobei der Luftkanal (31) durch eine Vielzahl Trennwände (A) in eine Vielzahl L-förmiger Kanäle unterteilt ist.

## Revendications

1. Dossier de siège de voiture ventilé comprenant :
un corps principal (1) ayant une surface inclinable (42), deux surfaces de côté (41) et une première portion de connexion, la surface inclinable (42) étant adaptée pour être inclinée, au moins une entrée (44) étant formée sur l'une des surfaces de côté (41), la première portion de connexion étant située sur la surface de côté qui est formée avec l'entrée (44),
au moins un canal d'air (31), formé dans le corps principal (1), le canal d'air (31) communiquant avec l'entrée (44),
plusieurs trous d'air (45) formés sur la surface inclinable (42), les trous d'air (45) communiquant avec le canal d'air (31),
un déflecteur (5), ayant une seconde portion de connexion, et la seconde portion de connexion étant reliée à la première portion de connexion,
dans lequel le déflecteur (5) est mobile entre une première position et une seconde position de manière à ajuster une quantité d'air déviée dans l'entrée (44) par le déflecteur (5),
dans lequel la première portion de connexion est reliée de manière pivotante à la seconde portion de connexion de telle manière que la seconde portion de connexion est capable de pivoter par rapport à la première portion de connexion autour d'un axe,
dans lequel, lorsque le déflecteur est pivoté dans la seconde position, le déflecteur ferme l'entrée et empêche l'air d'entrer dans l'entrée d'air,
**caractérisé en ce que**
la première portion de connexion comprend une bille (21), la seconde portion de connexion comprend plusieurs ergots (51) et la bille (21) bute de manière sélective contre l'un des ergots (51) ou que la seconde portion de connexion est un axe et la première portion de connexion est un trou axial pour l'axe pour qu'il soit relié par pivotement à celui-ci.

2. Dossier de siège de voiture ventilé selon la revendication 1 dans lequel le corps principal (1) comprend une surface de dessus (43), la surface de dessus (43) est formée avec au moins une sortie (431) et la sortie (431) communique avec le canal d'air (31).

3. Dossier de siège de voiture ventilé selon la revendication 2 dans lequel le corps principal (1) comprend de plus un couvercle (432), une extrémité du couvercle (432) est fixée de manière pivotante sur le corps principal (1) et le couvercle (432) est situé sur un côté de la sortie (431).

4. Dossier de siège de voiture ventilé selon la revendication 1 dans lequel le canal d'air (31) est divisé en plusieurs canaux en forme de L par plusieurs cloisonnements (A).
